Europäisches Patentamt

(19) European Patent Office (11) Numéro de publication: **0 270 442**
**B1**
Office européen des brevets

(12) **FASCICULE DE BREVET EUROPEEN**

(45) Date de publication du fascicule du brevet: (51) Int. Cl.⁵: **G01B 7/34**, G01B 7/28,
05.09.90 B21B 37/00

(21) Numéro de dépôt: **87402601.6**

(22) Date de dépôt: **18.11.87**

---

(54) **Rouleau de contrôle au défilé du profil d'une bande.**

---

(30) Priorité: **20.11.86 FR 8616178** (73) Titulaire: **CLECIM, 107 boulevard de la Mission Marchand, F-92400 Courbevoie(FR)**

(43) Date de publication de la demande:
**08.06.88 Bulletin 88/23** (72) Inventeur: **Morel, Michel, 4 Bis rue André Chénier, F-77500 Chelles(FR)**

(45) Mention de la délivrance du brevet:
**05.09.90 Bulletin 90/36** �ed Mandataire: **Le Brusque, Maurice et al, Cabinet Harlé et Phélip 21, rue de la Rochefoucauld, F-75009 Paris(FR)**

(84) Etats contractants désignés:
**AT BE DE ES GB IT LU NL SE**

(56) Documents cités:
**EP-A- 28 191**
**FR-A- 2 357 876**
**US-A- 3 481 194**
**US-A- 3 688 571**
**US-A- 4 513 933**

---

## Description

L'invention a pour objet un rouleau de contrôle au défilé du profil d'une bande, utilisable spécialement pour détecter les défauts de planéité d'une bande tendue en défilement telle une tôle en cours ou à l'issue d'une opération de laminage ou d'étirage. Lors du laminage de bandes de métal et notamment de bande mince laminée à froid, il apparaît des défauts de planétité provenant en particulier de réductions relatives différentes de l'épaisseur de la bande dans le sens transversal à la direction de laminage. Ces parties subissant des réductions différentes ont tendance à s'allonger de façon également différentes et il apparaît de ce fait dans la tôle un état de contrainte interne qui, lorsque le matériau n'est pas suffisamment épais et rigide, se traduit par des défauts de planéité tels que des poches au centre de la tôie ou des vagues sur les rives.

Il est nécessaire de détecter ces défauts de planéité pour y remédier en agissant sur les conditions de laminage et en tout cas pour contrôler la qualité du produit en fin d'opération. A cet effet, on utilise généralement un rouleau déflecteur sur lequel on fait passer sous tension la tôle à contrôler, ce rouleau de contrôle étant constitué généralement d'une paroi tubulaire montée rotative autour d'un axe perpendiculaire à la direction de défilement de la bande et sur la périphérie de laquelle sont placés un ensemble de capteurs disposés en au moins une série comprenant plusieurs capteurs répartis sur la longueur du rouleau sensiblement le long d'une direction parallèle à l'axe de rotation.

Les capteurs sont montés de façon amovible dans des logements ménagés dans la paroi tubulaire et s'ouvrant normalement sur la face interne de celle-ci, l'extrémité du logement tournée vers l'extérieur étant fermée par une enveloppe qui peut être qppliquée par frettage sur la paroi tubulaire. Pour faciliter le montage des capteurs, ces derniers peuvent être enfilés dans des orifices usinés dans la paroi interne et fixés sur celle-ci chacun par une bride.

Dans une disposition plus perfectionnée connue de EP-A 28 191, les capteurs sont disposés en plusieurs séries écartées l'une de l'autre de façon à couvrir la périphérie du rouleau. Dans chaque série, les capteurs peuvent avantageusement être légèrement écartés de part et d'autre d'une direction moyenne parallèle à l'axe et leurs positions longitudinales sont, en outre, déterminées de façon qu'ils se répartissent le long d'une ligne hélicoïdale s'enroulant en plusieurs tours sur toute la longueur du rouleau; de la sorte, les capteurs couvrent la largeur totale de la tôle en passant successivement sous la partie de celle-ci en appui sur le rouleau pendant un ou plusieurs tours de ce dernier.

Pour repérer exactement les défauts de planéité résultant de l'état de contrainte détecté par les capteurs, il est nécessaire de positionner et d'orienter ces derniers à l'intérieur de leurs logements respectifs avec une grande précision en calant le zéro de chacun. Par ailleurs, si l'on considère les capteurs placés le long d'une même génératrice du rouleau, il est préférable de réaliser un léger décalage angulaire des capteurs les uns par rapport aux autres et, comme les capteurs sont montés normalement par l'intérieur de la paroi tubulaire interne du rouleau, leur montage avec réglage précis constitue une opération longue et onéreuse. En outre, d'une façon générale, la maintenance de l'ensemble est assez difficile et coûteuse.

L'invention a pour objet un nouveau mode de positionnement et de fixation des capteurs permettant de remédier à l'ensemble de ces inconvénients.

Conformément à l'invention. l'ensemble des capteurs de la série sont montés sur une barrette de support rectiligne centrée sur la direction moyenne de la série, ladite barrette étant appliquée contre la face interne de l'enveloppe et maintenue en position par des moyens de fixation amovibles.

Dans le cas où les capteurs sont disposés en plusieurs séries comprenant chacune plusieurs capteurs répartis le long d'une direction moyenne parallèle à l'axe, le rouleau est muni d'une pluralité de barrettes rectilignes de support, chacune, d'une série de capteurs, chaque barrette étant centrée suivant la direction moyenne de la série correspondante.

Chaque barrette est appliquée sur la face interne de la paroi tubulaire le long d'une d'appui cylindrique de même diamètre et les barrettes sont maintenues écartées l'une de l'autre par des cales fixées sur la face interne de la paroi.

De façon particulièrement avantageuse, chaque barrette est munie, au niveau de chaque capteur, d'un lamage définissant un plan d'appui d'une bride de fixation du capteur et au centre duquel est ménagé un orifice de passage et de centrage du capteur débouchant dans le logement correspondant de la paroi tubulaire en centré suivant un axe radial plus ou moins incliné par rapport à un plan médian passant par l'axe du rouleau et l'axe longitudinal de la baguette en fonction de la position du capteur, chaque lamage étant perpendiculaire à l'axe radial correspondant.

Les capteurs sont reliés à un organe de mesure tel qu'une chaîne d'acquisition par l'intermédiaire d'un collecteur tournant sur lequel sont branchés les différents capteurs, chacun par l'intermédiaire d'un câble individuel de transmission des informations détectées. Selon une disposition avantageuse de l'invention, chaque barrette est munie d'une rainure longitudinale dans laquelle passent les câbles individuels correspondant au capteur porté par la barrette et qui sont reliés au collecteur tournant par l'intermédiaire d'un connecteur commun placé à l'extrémité correspondante de la barrette.

Dans un mode de réalisation particulier, les cales de positionnement des barrettes les unes par rapport aux autres sont munies de faces longitudinales de guidage et de maintien des barrettes s'étendant sur au moins une partie de la longueur du rouleau. De la sorte, les cales de guidage étant fixées sur la paroi interne de l'enveloppe tubulaire, il est possible de poser à l'avance les capteurs sur les barrettes et d'introduire celles-ci l'une après l'autre à l'intérieur du rouleau en les appliquant entre les cales correspondantes sur la face interne de la paroi et en les fixant dans cette position par des croisillons de maintien placés aux deux extrémités du rouleau.

Mais l'invention sera mieux comprise par la description suivante d'un mode de réalisation particulier donné à titre d'exemple et représenté sur les dessins annexés.

Fig. 1 est une vue schématique de dessus d'un rouleau de contrôle;

Fig. 2 est une vue de détail de l'extrémité du rouleau de contrôle, en coupe longitudinale par un plan passant par son axe;

Fig. 3 est une vue de détail en coupe transversale par un plan AA (Fig. 2) passant par l'axe d'un capteur.

Fig. 4 est une vue de dessous de l'extrémité d'une barrette;

Fig. 5 est une vue schématique, en coupe transversale, d'un mode de fixation des barrettes.

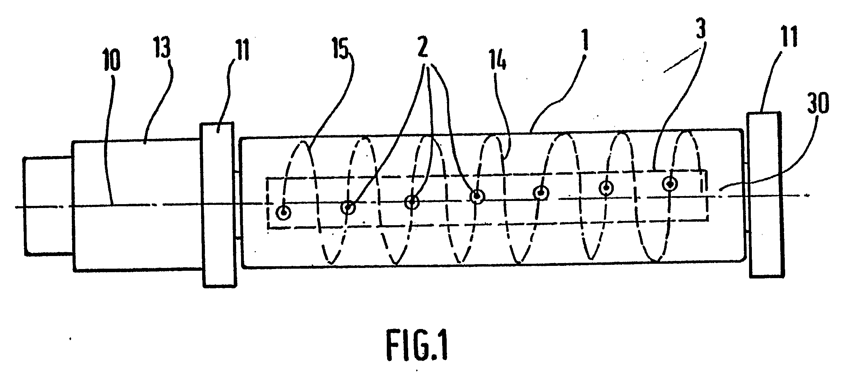

Sur la figure 1, on a représenté schématiquement un rouleau de contrôle 1 de type connu, porté à ses extrémités par deux paliers 11 et sur lequel sont montés une pluralité de capteurs 2 dont une série a été représenté sur la Figure, les capteurs étant reliés à un organe de mesure tel qu'une chaîne d'acquisition par l'intermédiaire d'un collecteur tournant 13.

Selon une disposition bien connue, les capteurs sont écartés les uns des autres sur la périphérie du rouleau et sont disposés suivant une ligne 15 enroulée en spirale de façon à former des séries s'étendant chacune sur toute la longueur du rouleau recouverte par la tôle le long d'une direction moyenne 30 parallèle à l'axe 10 du rouleau. Cependant, comme on l'a représenté sur la Figure 1, il est habituel de décaler légèrement les capteurs 2 d'une même série de part et d'autre de la direction moyenne 30.

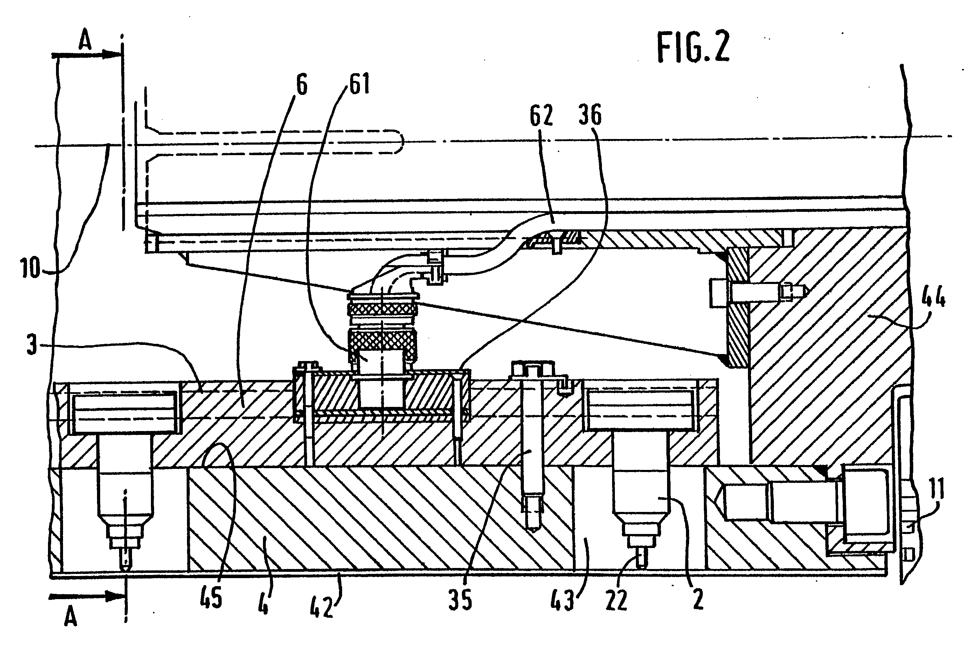

Selon l'invention, les capteurs 2 d'une même série sont montés sur une barrette 3 parallèle à l'axe 10 du rouleau et représentée plus en détail sur les Figures 2, 3 et 4 qui montrent l'extrémité de la barrette tournée du côté du collecteur 13.

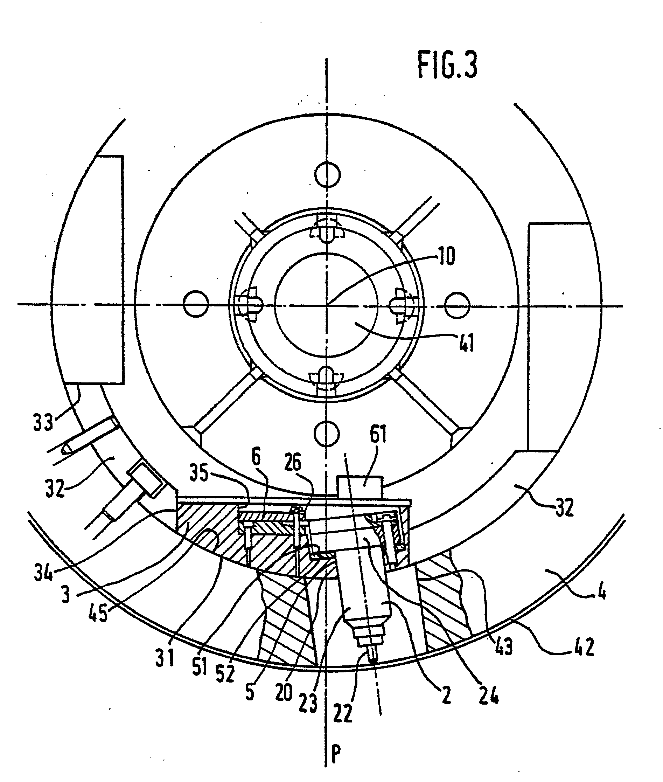

Comme on le voit sur les Figures 2 et 3, le rouleau de contrôle est constitué d'une paroi tubulaire 4 montée rotative autour d'un axe de rotation 10 et recouverte extérieurement d'une enveloppe mince 42 fixée généralement par frettage. Des orifices 43 sont ménagés radialement à travers la paroi tubulaire 4 et débouchent à l'intérieur de celle-ci; ils sont fermés vers l'extérieur par l'enveloppe mince 42 et un capteur 2 est placé dans chaque orifice 43 de façon que l'organe de palpage 22 du capteur 2 s'appuie sur la face interne de l'enveloppe 42. Dans le mode de réalisation représenté, la paroi tubulaire 4 est centrée sur l'axe 10 par l'intermédiaire de flasques 44 fixés à ses extrémités et sur lesquels sont montés des tourillons tournant dans les paliers 11, mais évidemment, d'autres modes de réalisation peuvent être utilisés.

Sur la Figure 2, on a représenté les deux derniers capteurs d'une série montée sur une barrette 3 qui, comme on le voit sur la Figure 3, est constituée d'une règle profilée présentant, du côté de la face interne 45 de la paroi 4, une face d'appui cylindrique 31 de même diamètre que la face 45 de façon à permettre l'application parfaite de la barrette 3 sur la paroi tubulaire 4.

Les barrettes 3 sont séparées les unes des autres par des cales de maintien 32 munies également d'une face d'application cylindrique épousant la forme de la face interne 45 de la paroi 4 sur lequelle elles sont fixées et chaque cale 32 est munie de deux faces de guidage 33, 34. Les faces 33, 34 en regard de deux cales successives 32 sont parallèles et espacées d'une distance égale à la largeur de la barrette 3 qui peut ainsi être enfilée dans l'espace libre ainsi ménagé en s'appliquant contre la face interne 45.

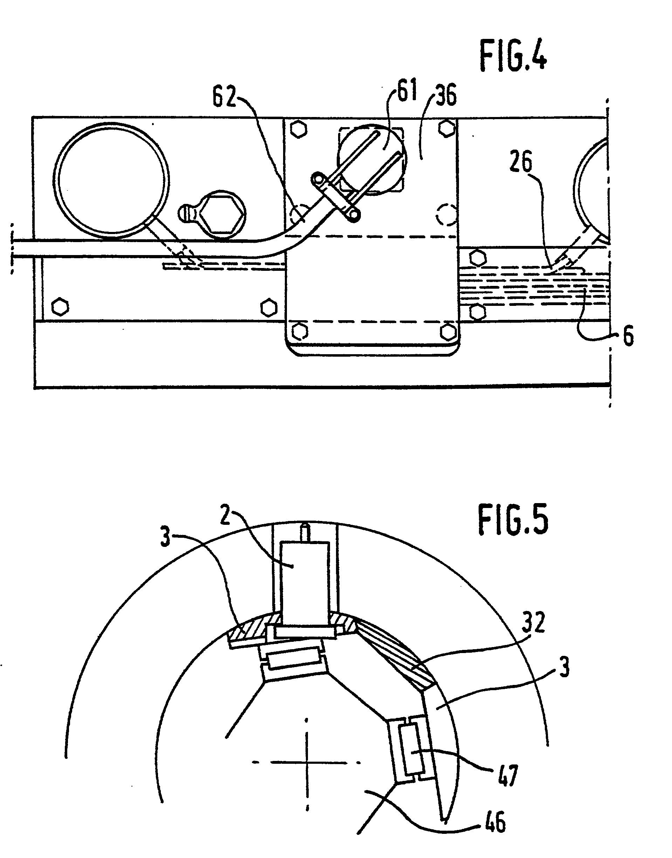

Dans l'exemple représenté sur la Figure 2, chaque barrette 3 est fixée sur la paroi tubulaire 4 par des vis 35 mais d'autres modes de fixation peuvent évidemment être utilisés pour réaliser un montage amovible des barrettes. Par exemple, sur la Figure 5, les barrettes 3 sont maintenues en place par des croisillons 46 placés aux deux extrémités du rouleau et sur lesquels s'appuient les différentes barrettes 3 par l'intermédiaire de clavettes de blocage 47.

Les capteurs 2 peuvent être de tout type classique permettant de mesurer soit le déformation de l'enveloppe 42, soit la contrainte appliquée localement sur celle-ci et comprennent généralement un palpeur 22 monté coulissant sur un corps cylindrique 23 centré sur un axe 20. Pour le montage des capteurs 2, chaque barrette est donc munie aux endroits voulus d'orifices de passage et de centrage 5 de diamètre égal à celui des corps 23 des capteurs 2 qui sont enfilés dans les orifices. Chaque orifice 5 est muni vers l'intérieur d'un lamage 51 perpendiculaire à l'axe de l'orifice et ménageant une face d'appui plane pour une bride de fixation 24 placée à la base du capteur. C'est donc le lamage 51 et l'orifice 5 qui détermuinent le positionnement précis et l'orientation du capteur 2, celui-ci débouchant dans un orifice correspondant 43 ménagé dans le paroi tubulaire 4 qui n'a pas besoin d'être positionné de façon trés précise et dont le diamètre est déterminé simplement en fonction des caractéristiques de l'enveloppe extérieure 42 de façon que la partie de celle-ci sur laquelle s'appuie le palpeur 22 soit suffisamment résistante et sensible aux variations de la contrainte appliquée par la tôle.

Grâce à cette disposition, il est possible de déterminer sur la barrette elle-même et avant montage sur le rouleau, l'orientation future de la face d'appui constituée par chaque lamage 51 ainsi que de l'axe de l'orifice 5 correspondant et en outre, de régler grossièrement le positionnement radial de chaque capteur par exemple au moyen de cales d'épaisseur 52 de façon à ajuster le zéro des capteurs.

D'autre part, chaque lamage 51 débouche dans une rainure longitudinale 35 qui s'étend sur toute la longueur de la barrette 3 et dans laquelle sont placés des câbles individuels 26 par lesquels les informations de mesure émises par chaque capteur 2 sont transmises au collecteur tournant 13. Selon une autre caractéristique avantageuse de la présente invention, l'ensemble des câbles individuels 26 des capteurs 2 d'une même série est regroupé dans un guide-câble 6 par exemple en téflon et qui peut être constitué d'une série de couches superposées dans lesquelles sont ménagées des rainures de passages des câbles 26 de façon que ces derniers soient parfaitement tenus en place et débouchent du guide-câble chacun à la hauteur d'un capteur 2. Le guide-câble 6 est placé dans la rainure 35 et conduit l'ensemble des câbles individuels 26 jusqu'à un connecteur commun 61 qui est relié au collecteur tournant 13 par un câble de branchement commun 62.

Le connecteur 61 est fixé à l'extrémité de la barrette 3 par un bloc de raccordement 36 qui recouvre les extrémités des câbles 26 venant des différents capteurs, ces derniers pouvant cependant se trouver d'un côté ou de l'autre du connecteur 61.

Grâce aux dispositions qui viennent d'être décrites, il est possible d'équiper à l'avance chaque barrette 3 des capteurs correspondants 2 dont les câbles individuels 26 sont branchés au connecteur 61 et maintenus par le guide-câble 6. Chaque barrette ainsi équipée peut être introduite à l'intérieur de l'enveloppe tubulaire 4, emboïtée entre les deux cales 32 qui fixent sa position et fixée par exemple par les vis 35. On ferme alors l'extrémité de la paroi 4 par le flasque 44 en faisant passer les câbles 62 de branchement de chaque connecteur 61 sur le collecteur 13.

Il est bien évident cependant que d'autres modes de montage pourraient être imaginés, l'invention n'était pas limitée au mode de réalisation qui vient d'être décrit et qui peut faire l'objet de variantes restant dans le cadre de protection défini par les revendications.

## Revendications

1. Rouleau de contrôle au défilé du profil d'une bande comprenant une paroi tubulaire (4) montée rotative autour d'un axe (10) et sur laquelle est appliquée la bande défilant suivant une direction perpendiculaire à l'axe, et un ensemble de capteurs (2) disposés sur la périphérie du rouleau en au moins une série (21) comprenant plusieurs capteurs répartis sur la longueur du rouleau le long d'une direction moyenne (30) parallèle à l'axe de rotation (10), lesdits capteurs (2) étant placés dans des logements (43) ménagés dans la paroi tubulaire (4) et s'ouvrant au moins sur la face interne de celle-ci pour le montage amovible des capteurs (2), caractérisé par le fait que les capteurs (2) sont montés sur une barrette de support rectiligne (3), centrée sur la direction moyenne (30) de la série, ladite barrette (3) étant appliquée contre la face interne (45) de la paroi (4) et maintenue en position par des moyens de fixation amovibles.

2. Rouleau de contrôle selon la revendication 1, dans lequel les capteurs (2) sont disposés en plusieurs séries (21) comprenant chacune plusieurs capteurs répartis le long d'une direction moyenne (30), caractérisé par le fait qu'il comprend une pluralité de barrettes rectilignes (3) de support, chacune d'une série de capteurs, chaque barrette étant centrée suivant la direction moyenne (30) de la série correspondante.

3. Rouleau de contrôle selon la revendication 2, caractérisé en ce que chaque barrette est appliquée sur la face interne de la paroi tubulaire (4) le long d'une face d'appui cylindrique de même diamètre et les barrettes sont maintenues écartées l'une de l'autre par des cales (32 fixées sur la face interne de la paroi (4).

4. Rouleau de contrôle selon l'une des revendications 1 et 2, caractérisé en ce que chaque barrette (3) est munie, au niveau de chaque capteur, d'un lamage (51) définissant un plan d'appui d'une bride (24) de fixation du capteur (2) et au centre duquel est ménagé un orifice (5) de passage et de centrage du capteur (2), débouchant dans le logement correspondant (43) de la paroi tubulaire (4) et centré sur un axe radial (50) plus ou moins incliné en fonction de la position du capteur par rapport à un plan médian passant par l'axe (10) du rouleau et la direction moyenne (30) de la barrette, chaque lamage (51) étant perpendiculaire à l'axe radial correspondant.

5. Rouleau de contrôle selon l'une des revendications précédentes, caractérisé en ce que chaque capteur (2) étant relié à un organe de mesure (12) par un câble individuel (62) de transmission des informations détectées, les câbles individuels (62) correspondant aux capteurs (2) d'une même barrette sont disposés dans une rainure longitudinale (35) ménagée le long de la barrette (3) celle-ci étant munie à son extrémité d'un connecteur (61) relié à l'organe de mesure (12) par un collecteur tournant (13) et sur lequel sont branchés les cables individuels (62) correspondants.

6. Rouleau de contrôle suivant l'une des revendications précédentes, caractérisé en ce que les cales (32) de positionnement des barrettes (13) les unes par rapport aux autres sont munies de faces longitudinales (34) de guidage et de maintien des barrettes (3) s'étendant sur au moins une partie de la longueur du rouleau (1).

7. Rouleau de contrôle selon la revendication 6, caractérisé en ce que les capteurs (2) sont fixés à l'avance sur les barrettes (3) et que, les cales de maintien (32) étant fixées sur la face interne (45) de la paroi tubulaire (4), les barrettes (3) équipées de capteurs sont introduites l'une après l'autre à l'intérieur du rouleau (1), appliquées entre les cales (32) correspondantes sur la face interne (45) de la paroi (4) et fixées dans cette position.

8. Rouleau de contrôle selon la revendication 7, caractérisé en ce que les barrettes (3) sont fixées sur la face interne (45) de la paroi (4) par des croisillons de maintien placés au moins à chaque extrémité et s'appuient sur chaque barrette par l'intermédiaire d'une clavette de blocage.

## Patentansprüche

1. Walze zum Kontrollieren eines sich bewegenden Streifens, bestehend aus einer um eine Achse (10) drehbar montierten rohrförmigen Wand (4), auf welche der sich gemäss einer zu dieser Achse senkrechten Richtung bewegende Streifen angedrückt wird, und aus einem an der Peripherie der Walze in mindestens einer Reihe (21) angeordneten Satz Fühler (2) mit mehreren entlang einer zur Drehachse (10) parallelen mittleren Richtung (30) über die Walzenlänge verteilten Fühlern, wobei zum Ein- und Ausbau diese Fühler (2) in in der rohrförmigen Wand angeordneten, sich mindestens zur Innenseite hin derselben öffnenden Vertiefungen (43) untergebracht sind, dadurch gekennzeichnet, dass die Fühler (2) auf einer geraden entlang der mittleren Richtung (30) der Reihe zentrierten Stützleiste (3) montiert sind, wobei diese Stützleiste (3) gegen die Innenseite (45) der Wand (4) gedrückt und durch abnehmbare Befestigungsmittel in dieser Lage gehalten wird.

2. Kontrollwalze nach Anspruch 1, bei welcher die Fühler (2) in mehreren Reihen (21) angeordnet sind, die jeweils mehrere gemäss einer mittleren Richtung (30) verteilten Fühler umfassen, dadurch gekennzeichnet, dass sie mehrere gerade Stützleisten (3) mit je einer Fühlerreihe umfasst, wobei jede Stützleiste entlang der mittleren Richtung (30) der entsprechenden Reihe zentriert ist.

3. Kontrollwalze nach Anspruch 2, dadurch gekennzeichnet, dass jede Stützleiste an die Innenseite der rohrförmigen Wand (4) entlang einer zylindrischen Stützfläche mit demselben Durchmesser angedrückt wird und die Stützleisten durch an der Innenseite der Wand (4) befestigten Keile gegenseitig im Abstand gehalten werden.

4. Kontrollwalze nach einem der Ansprüche 1 und 2, dadurch gekennzeichnet, dass bei jedem Fühler jede Stützleiste (3) eine eine Stützfläche eines Befestigungsflansches des Fühlers (2) bildende Senkung (51) aufweist, in dessen Mitte eine Durchgangs- und Zentrieröffnung (5) des Fühlers (2) angeordnet ist, welche in die entsprechende Vertiefung (43) der rohrförmigen Wand (4) mündet und auf eine radiale Achse (50) zentriert ist, die je nach der Lage des Fühlers zu einer durch die Walzenachse (10) verlaufende Mittelebene und der mittleren Richtung (30) der Stützleiste mehr oder weniger geneigt ist, wobei jede Senkung (51) senkrecht zur entsprechenden Radialachse ist.

5. Kontrollwalze nach einem der vorhergehenden Ansprüche, dadurch gekennzeichnet, dass, wobei jeder Fühler (2) über ein getrenntes Kabel (62) zur Übertragung der abgetasteten Daten mit einem Messglied (12) verbunden ist, die den Fühlern (2) einer und derselben Stützleiste entsprechenden einzelnen Kabel (62) in einer entlang der Stützleiste (3) angeordneten Längsnut (35) untergebracht sind, wobei dieses an seinem Ende eine Steckverbindung (61) aufweist, die über einen Drehkollektor (13) mit dem Messglied (12) verbunden ist, und auf welcher die entsprechenden einzelnen Kabel (62) angeschlossen sind.

6. Kontrollwalze nach einem der vorhergehenden Ansprüche, dadurch gekennzeichnet, dass die Keile (32) zum gegenseitigen Positionieren der Stützleisten (13) Längsflächen (34) zum Führen und Halten der Stützleisten (3) aufweisen, die über mindestens einen Teil der Länge der Walze (1) verlaufen.

7. Kontrollwalze nach Anspruch 6, dadurch gekennzeichnet, dass die Fühler (2) auf den Stützleisten (3) vorbefestigt sind, und wobei die Haltekeile (32) auf der Innenseite (45) der rohrförmigen Wand (4) befestigt sind, dass die mit den Fühlern ausgestatteten Stützleisten (3) nacheinander innen in die Walze (1) hinein eingeführt werden, zwischen die entsprechenden Keile (32) gegen die Innenseite (45) der Wand (4) angedrückt und in dieser Lage befestigt werden.

8. Kontrollwalze nach Anspruch 7, dadurch gekennzeichnet, dass die Stützleisten (3) an der Innenseite (45) der Wand (4) über Halte-Kreuzzapfen befestigt sind, die mindestens an jedem Ende angeordnet und sich über einen Feststellkeil auf jeder Stützleiste abstützen.

**Claims**

1. Continuous monitoring roller for the profile of a strip comprising a tubular wall (4) mounted rotatably about an axis (10) whereto the moving strip is applied in a direction perpendicular to the axis, and an array of sensors (2) arranged on the circumference of the roller in at least one series (21) comprising a plurality of sensors distributed over the length of the roller in a mean direction (30) parallel to the axis of rotation (10), said sensors (2) being placed in housings (43) made in the tubular wall (4) and opening at least on the interior face thereof for the detachable fitting of the sensors (2), characterized in that the sensors (2) are fitted on a straight support bar (3) centred on the mean direction (30) of the series, said bar (3) being applied against the interior face (45) of the wall (4) and maintained in position by detachable fixing means.

2. Monitoring roller according to Claim 1, wherein the sensors (2) are arranged in a plurality of series (21) each comprising a plurality of sensors distributed along a mean direction (30), characterized in that it comprises a plurality of straight support bars (3), each of a series of sensors, each bar being centred according to the mean direction (30) of the corresponding series.

3. Monitoring roller according to Claim 2, characterized in that each bar is applied to the interior face of the tubular wall (4) along a cylindrical support face of the same diameter and the bars are maintained spaced from one another by chocks (32) fixed to the interior face of the wall (4).

4. Monitoring roller according to either of Claims 1 and 2, characterized in that each bar (3) is equipped at the level of each sensor with a face (51) defining a support plane of a fixing flange (24) of the sensor (2), and in the centre of which a passage and centring orifice (5) is made for the sensor (2), leading into the corresponding housing (43) of the tubular wall (4) and centred on a radial axis (50) more or less inclined as a function of the position of the sensor relative to a median plane passing through the axis (10) of the roller and the mean direction (30) of the bar, each face (51) being perpendicular to the corresponding radial axis.

5. Monitoring roller according to one of the preceding claims, characterized in that each sensor (2) being connected to a measuring instrument (12) by an individual transmission cable (62) for the information detected, the individual cables (62) corresponding to the sensors (2) of one and the same bar are arranged in a longitudinal groove (35) made along said bar (3), the latter being equipped at its end with a connector (61) connected to the measuring instrument (12) by a rotary collector (13), and on which the corresponding individual cables (62) are branched.

6. Monitoring roller according to one of the preceding claims, characterized in that the chocks (32) positioning the bars (13) relative to each other are equipped with longitudinal faces (34) to guide and maintain the bars (3) extending over at least a part of the length of the roller (1).

7. Monitoring roller according to Claim 6, characterized in that the sensors (2) are fixed beforehand to the bars (3) and that, the maintaining chocks (32) being fixed to the interior face (45) of the tubular wall (4), the bars (3) equipped with sensors are introduced one after the other into the interior of the roller (1), applied between the corresponding chocks (32) on the interior face (45) of the wall (4) and fixed in that position.

8. Monitoring roller according to Claim 7, characterized in that the bars (3) are fixed to the interior face (45) of the wall (4) by maintaining braces placed at least at each end and bear upon each bar by mean of a locking key.

FIG.1

EP 0 270 442 B1

FIG.2

EP 0 270 442 B1

FIG.3

FIG.4

FIG.5